# DEMANDE DE BREVET EUROPEEN

(11) **EP 2 781 409 A1**
(43) Date de publication de la demande: **24.09.2014**
(21) Numéro de dépôt: 14159908.4
(22) Date de dépôt: 14.03.2014
(51) Int. Cl.: B60Q 1/28, B60Q 1/34, F21S 8/10, F21K 99/00

(54) **Système d'éclairage et/ou de signalisation multifonction**

(30) Priorité: 22.03.2013 FR 1352591
(71) Demandeur: VALEO VISION, 93012 Bobigny Cedex (FR)
(72) Inventeur: Albou, Pierre, 75013 PARIS (FR); Godbillon, Vincent, 75011 PARIS (FR)

(57) **Abrégé**

La présente invention concerne un système d'éclairage et/ou de signalisation (10) pour véhicule automobile comporte une source lumineuse primaire émettant un rayonnement lumineux (L) et un système de balayage recevant le rayonnement lumineux de la source lumineuse primaire. Le rayonnement est réparti spatialement sur un dispositif (20) de conversion de longueur d'onde, de façon à balayer une surface (24) de balayage. Le dispositif (20) de conversion de longueur d'onde comprend un substrat formant miroir (26). Le dispositif (20) de conversion de longueur d'onde qui reçoit le rayonnement lumineux (L) de la source primaire comporte au moins des premier (30) et deuxième (32) matériaux phosphorescents différents et réémet de la lumière (B). Un système optique d'imagerie reçoit la lumière (B) pour former un faisceau lumineux (FL). Le système d'éclairage et/ou de signalisation réalise deux fonctions différentes d'éclairage et/ou de signalisation.

## Description

La présente invention concerne le domaine technique des systèmes d'éclairage et/ou de signalisation pour véhicule automobile.

Un système d'éclairage et/ou de signalisation pour véhicule automobile est destiné à réaliser une fonction d'éclairage et/ou de signalisation par exemple une fonction de feu de circulation diurne (DRL, conformément à l'acronyme anglais pour « Daytime Running Light ») ou une fonction clignotants ou indicateur de direction (TI conformément à l'acronyme anglais pour « Turn Indicator »).

Les feux de circulation diurnes émettent de la lumière blanche à l'avant d'un véhicule pour accroître la visibilité du véhicule notamment dans des conditions de lumière du jour.

Les clignotants émettent de la lumière ambre notamment pour indiquer un changement de direction du véhicule.

On connaît déjà du document EP 2 063 170 un système d'éclairage pour véhicule automobile, muni d'une source laser dont le rayonnement lumineux est réparti spatialement, au moyen d'un système de balayage, sur la surface d'un dispositif de conversion de longueur d'onde qui comprend un substrat en matériau transparent sur lequel est déposée une couche mince de matériau phosphorescent.

On notera que l'homme du métier entend par « matériau phosphorescent » un matériau ayant un effet phosphorescent, comprenant généralement différents éléments chimiques, mais ne contenant pas nécessairement de phosphore.

Le rayonnement lumineux traverse le dispositif de conversion de longueur d'onde lequel réémet un rayonnement de lumière blanche.

Ce système d'éclairage comporte en outre un système optique d'imagerie recevant la lumière blanche réémise par le dispositif de conversion de longueur d'onde et projetant cette lumière en avant du véhicule pour former un faisceau lumineux. Dans un tel système, le dispositif de conversion de longueur d'onde est situé au voisinage d'un plan focal du système optique d'imagerie.

L'efficacité de ce système d'éclairage est limitée par les phénomènes d'absorption du rayonnement par le substrat en matériau transparent et les réflexions parasites du rayonnement traversant les dioptres du dispositif de conversion. En fait, une partie du rayonnement est réfléchie vers la source de rayonnement et approximativement la moitié de la lumière blanche est réémise vers l'arrière du dispositif de conversion de longueur d'onde, c'est-à-dire à l'opposé du système optique d'imagerie. De plus, le substrat en matériau transparent est généralement en polycarbonate ou en verre. Ces matériaux sont connus pour être de mauvais conducteurs thermiques. Or la puissance du rayonnement laser à tendance à chauffer le matériau phosphorescent de manière importante sans possibilité de dissipation de cette chaleur dans le verre ou le polycarbonate. Il résulte de cet échauffement une baisse du rendement de conversion du rayonnement laser en lumière blanche.

Par ailleurs, les fonctions de feu de circulation diurne et de clignotant sont généralement réalisées par des systèmes d'éclairage différents.

L'invention a pour but de limiter le nombre de systèmes d'éclairage différents sur un véhicule automobile et de minimiser les dispersions du rayonnement du laser.

A cet effet, l'invention a pour objet un système d'éclairage et/ou de signalisation pour véhicule automobile comportant :
- au moins une source lumineuse primaire émettant un rayonnement lumineux,
- un système de balayage recevant le rayonnement lumineux de la source lumineuse primaire et le répartissant spatialement sur un dispositif de conversion de longueur d'onde, de façon à balayer sur ce dispositif de conversion une surface de balayage,
- le dispositif de conversion de longueur d'onde recevant le rayonnement lumineux de la source primaire et réémettant un rayonnement de lumière,
- un système optique d'imagerie recevant la lumière réémise par le dispositif de conversion de longueur d'onde et projetant cette lumière dans l'axe du véhicule pour former un faisceau lumineux, le dispositif de conversion de longueur d'onde étant situé au voisinage d'un plan focal du système optique d'imagerie.

Selon l'invention, le dispositif de conversion de longueur d'onde comprend un substrat formant miroir recouvert au moins en partie par une couche comportant au moins des premier et deuxième matériaux phosphorescents différents répartis en au moins deux zones différentes de la surface libre de la couche, le système d'éclairage et/ou de signalisation comprenant de plus des moyens de pilotage du système de balayage de façon à former la surface balayée en y incluant une surface du premier matériau et/ou une surface du deuxième matériau en fonction d'un paramètre de sélection, le système d'éclairage et/ou de signalisation réalisant deux fonctions différentes d'éclairage et/ou de signalisation.

Ainsi, on peut réaliser deux fonctions différentes d'éclairage et/ou de signalisation au moins avec un seul système d'éclairage et/ou de signalisation. Grâce aux moyens de pilotage du système de balayage, on peut sélectionner le balayage des premières zones du premier matériau, par exemple pour réaliser la fonction de feu de circulation diurne. On peut alternativement sélectionner le balayage des deuxièmes zones du deuxième matériau, qui réémettent par exemple de la lumière ambre, pour réaliser la fonction indicateur de direction. On pourrait envisager de sélectionner le balayage des première et deuxième zones à la fois, notamment si les premier et deuxième matériaux réémettent des lumières dans des longueurs d'onde complémentaires, pour réaliser une fonction de feu de circulation diurne.

Par ailleurs, un tel système d'éclairage et/ou de signalisation permet de minimiser les dispersions du rayonnement du laser. En effet, du fait que l'on utilise un dispositif de conversion de longueur d'onde muni d'un miroir et que l'on place le système de balayage et le système optique d'imagerie du même côté réfléchissant du miroir, le rayonnement émis par la source lumineuse ne traverse plus le substrat transparent et surtout, la lumière émise par le dispositif est renvoyée vers le système optique d'imagerie. Les pertes de rayonnement sont ainsi considérablement diminuées.

On considère que deux matériaux phosphorescents sont différents lorsqu'ils réémettent des lumières de longueurs d'onde différentes. Ainsi, deux matériaux phosphorescents différents peuvent être de compositions différentes ou de même composition mais recouverts par des filtres ou zones de filtres sélectionnant des lumières de longueurs d'onde différentes.

Un système d'éclairage et/ou de signalisation selon l'invention peut en outre comporter l'une ou plusieurs des caractéristiques optionnelles suivantes :
- le premier matériau réémet de la lumière blanche et le deuxième matériau réémet de la lumière ambre ;
- le deuxième matériau réémet une couleur complémentaire de celle du premier matériau ;
- le dispositif de conversion de longueur d'onde comprend un troisième matériau recouvrant le substrat, les premier, deuxième et troisième matériaux étant répartis en trois zones différentes de la surface libre de la couche ;
- le troisième matériau réémet de la lumière rouge ;
- les zones coïncident avec des cellules d'une matrice de ligne(s) et de colonne(s), les différents matériaux phosphorescents étant répartis dans les différentes cellules, la matrice comportant par exemple une ligne et plusieurs colonnes, une colonne et plusieurs lignes, plusieurs lignes et plusieurs colonnes, ou encore deux ou trois cellules successives par rapport à la direction de balayage comportant un même matériau ;
- les cellules de la matrice sont sensiblement rectangulaires et ont au moins un côté de longueur sensiblement égale à 1 mm, de préférence à 0, 5 mm, et encore de préférence à 0,1 mm ;
- la surface totale de l'ensemble des zones de matériaux recouvrant le substrat a une forme générale de rectangle dont le grand côté est sensiblement égal à deux fois le petit côté ;
- la surface balayée est définie par un balayage par le rayonnement lumineux activé des zones de même matériau uniquement ;
- la surface balayée est définie par balayage de toutes les zones des différents matériaux, le rayonnement lumineux n'étant activé que lors du balayage des zones d'un même matériau uniquement ;
- le système comprend des moyens de variation de la vitesse du balayage de zone en fonction de paramètres tels que la dimension d'une zone ou la position d'une zone ;
- le substrat forme un miroir ;
- le substrat est en matériau transparent, des matériaux photosensibles
différents étant déposés sur des zones différentes sur une face du matériau transparent, l'autre face recevant le rayonnement lumineux de la source lumineuse.

L'invention a également pour objet un procédé de pilotage d'un système d'éclairage et/ou de signalisation pour véhicule automobile, selon lequel l'on pilote le système d'éclairage et/ou de signalisation de façon que le rayonnement lumineux balaye uniquement des zones de même matériau du dispositif de conversion de longueur d'onde.

L'invention a encore pour objet un procédé de pilotage d'un système d'éclairage et/ou de signalisation pour véhicule automobile, selon lequel l'on pilote le système d'éclairage et/ou de signalisation de la façon suivante :
- on pilote le système de balayage comme si le rayonnement lumineux devait balayer l'ensemble des zones de matériaux différents du dispositif de conversion de longueur d'onde, et
- on commande l'activation de la source lumineuse uniquement lorsque le système de balayage est dans une configuration d'orientation du système lumineux vers des zones du premier matériau du dispositif de conversion de longueur d'onde, la source lumineuse étant désactivée lorsque le système de balayage est dans une configuration d'orientation du système lumineux vers des zones d'un autre matériau que le premier matériau du dispositif de conversion de longueur d'onde.

L'invention sera mieux comprise à la lecture de la description qui va suivre, donnée uniquement à titre d'exemple et faite en se référant aux dessins annexés dans lesquels :
- la figure 1 est une vue schématique d'un système d'éclairage et/ou de signalisation selon l'invention ;
- les figures 2 et 3 sont des vues schématiques d'un dispositif de conversion de longueur d'onde selon un premier mode de réalisation dans deux états de fonctionnement différents respectivement ;
- les figures 4 et 5 sont des vues schématiques d'un dispositif de conversion de longueur d'onde selon un deuxième mode de réalisation dans deux états de fonctionnement différents respectivement ;
- les figures 6 et 7 sont des vues schématiques d'un dispositif de conversion de longueur d'onde selon un troisième mode de réalisation dans deux états de fonctionnement différents respectivement ;
- les figures 8 et 9 sont des vues schématiques d'un dispositif de conversion de longueur d'onde selon un quatrième mode de réalisation dans deux états de fonctionnement différents respectivement ;
- les figures 10 et 11 sont des vues schématiques d'un dispositif de conversion de longueur d'onde selon un cinquième mode de réalisation dans deux états de fonctionnement différents respectivement ;
- les figures 12 et 13 sont des vues schématiques d'un dispositif de conversion de longueur d'onde selon un sixième mode de réalisation dans deux états de fonctionnement différents respectivement ;
- les figures 14, 15 et 16 sont des vues schématiques d'un dispositif de conversion de longueur d'onde selon des septième, huitième et neuvième modes de réalisation respectivement.

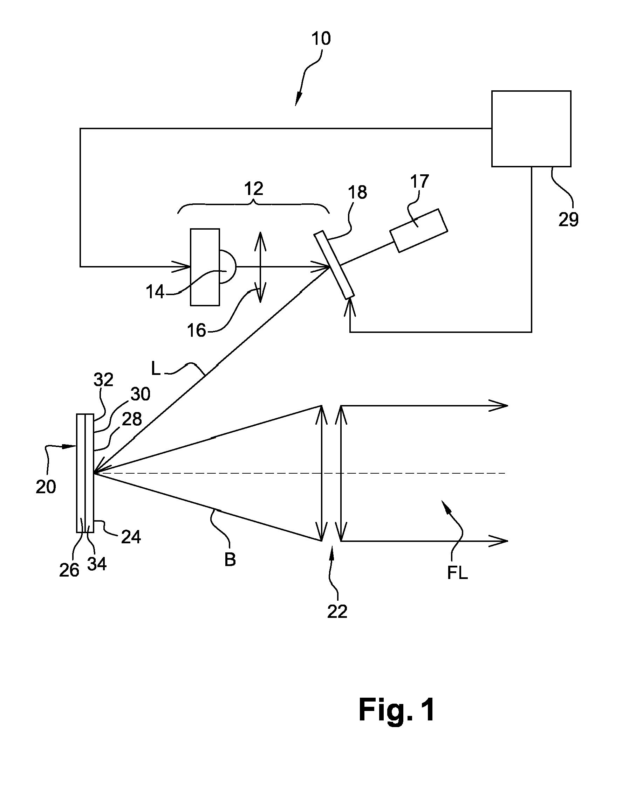

En référence à la figure 1, on voit un système d'éclairage et/ou de signalisation 10 selon la présente invention. Le système 10 comporte une source 12 de rayonnement lumineux comprenant une source lumineuse primaire 14 de type classique, des moyens optiques classiques de focalisation 16 et des moyens 17 de pilotage d'un système de balayage 18.

La source lumineuse 14 est une source laser comprenant par exemple une diode laser, émettant par exemple un rayonnement laser L dont la longueur d'onde est comprise entre 400 nanomètres et 500 nanomètres, et de préférence voisine de 450 ou 460 nanomètres. Ces longueurs d'onde correspondent à des couleurs allant du bleu au proche ultraviolet, cette dernière couleur étant plutôt située vers les longueurs d'onde inférieures à 400nm.

La source lumineuse primaire 14 peut en variante comprendre un dispositif optique combinant en un seul faisceau plusieurs rayonnements lasers, par exemple à l'aide de fibres optiques ou de dispositifs tirant profit des polarisations différentes de différentes sources laser.

Le système de balayage 18, de type classique, comprend dans l'exemple décrit un micro-miroir unique, mobile autour de deux axes orthogonaux, tel que ceux qui sont utilisés dans les systèmes de balayage optique appelés « scanners ».

Le micro-miroir réfléchit le rayonnement lumineux vers un dispositif 20 de conversion de longueur d'onde qui transmet le rayonnement vers un système optique classique d'imagerie 22.

Le rayonnement laser L généré par la source 14 est dévié selon deux directions par le système de balayage 18, et il en émerge dans un angle solide interceptant une surface de balayage 24 du dispositif 20 de conversion de longueur d'onde. Dans la présente description, on appelle « surface de balayage » la surface effectivement balayée par le rayonnement laser L lorsqu'il est activé.

Le dispositif 20 de conversion de longueur d'onde comprend un substrat 26 formant miroir qui est recouvert d'une couche 28.

Le système de balayage 18 et le système optique d'imagerie 22 sont disposés du même côté réfléchissant du miroir 26 formé par le substrat.

Ladite couche 28 comporte au moins des premier et deuxième matériaux 30, 32 phosphorescents différents répartis en au moins deux zones différentes de la surface libre de la couche 28. Le premier matériau 30 réémet de la lumière blanche et le deuxième matériau 32 réémet de la lumière ambre. Les moyens de pilotage 17 du système de balayage 18 sont adaptés pour former la surface balayée 24 en y incluant une surface du premier matériau 30 ou une surface du deuxième matériau 32 en fonction d'un paramètre de sélection, par exemple, d'une fonction de feu de circulation diurne ou d'une fonction clignotant.

De façon connue, chaque point du premier matériau 30 de la couche 28 du dispositif 20 de conversion de longueur d'onde recevant le rayonnement laser L, qui est monochromatique et cohérent, réémet, vers le système d'imagerie 22, une lumière B de longueur d'onde différente, et notamment une lumière qui peut être considérée comme « blanche », c'est-à-dire qui comporte une pluralité de longueurs d'onde entre environ 400 nanomètres et 800 nanomètres, c'est-à-dire comprises dans le spectre de la lumière visible. Cette émission de lumière se produit, selon un diagramme d'émission lambertienne, c'est-à-dire avec une luminance uniforme dans toutes les directions. De la même manière, chaque point du deuxième matériau 32 de la couche 28 réémet une lumière ambre.

La couche 28 de matériaux phosphorescents étant déposée sur le substrat 26 réfléchissant pour le rayonnement laser L, on est assuré que le rayonnement laser L qui n'aurait pas rencontré de grain de matériaux phosphorescents avant d'avoir traversé complètement la couche 28 de matériau phosphorescent, pourra rencontrer un grain de matériau phosphorescent après avoir été réfléchi par le substrat 26. En outre les photons réémis par le matériau phosphorescent vers l'arrière du dispositif seront réfléchis vers la sortie de lumière.

Le substrat 26 est choisi dans les matériaux bons conducteurs thermiquement, comme l'aluminium par exemple. Le substrat 26 permet ainsi de limiter la température de la couche 28 de matériau phosphorescent en favorisant la dissipation de chaleur par le substrat 26.

La surface de balayage 24 est formée, au moins en partie, par la surface de la couche 28 du premier matériau phosphorescent 30 ou bien par la surface de la couche 28 du deuxième matériau 32 recouvrant le substrat 26, ou encore par la surface des premier et deuxième matériaux.

La couche 28 de matériaux phosphorescents est située au voisinage immédiat du plan focal du système optique 22 d'imagerie, qui forme alors à l'infini une image de la couche 28 de matériaux phosphorescents, ou plus exactement des points de cette couche qui émettent de la lumière en réponse à l'excitation laser qu'ils reçoivent. En d'autres termes, le système optique d'imagerie 22 forme un faisceau lumineux FL avec la lumière émise par les différents points de la couche 28 de matériaux phosphorescents illuminés par le rayonnement laser L.

Le faisceau lumineux FL émergeant du système d'imagerie 22 est ainsi directement fonction des rayons lumineux B émis par la couche 28 de matériaux phosphorescents, eux-mêmes fonction directement du rayonnement laser L qui balaye cette couche 28.

Une unité de commande 29 pilote les différents composants de la source 12 de rayonnement lumineux en fonction de la photométrie désirée du faisceau lumineux FL. En particulier, l'unité 29 pilote les moyens de pilotage 17 du système de balayage 18, pour que le rayonnement laser L balaye successivement tous les points des zones sélectionnées de la couche 28 de matériaux phosphorescents. L'unité 29 pilote également l'activation de la source lumineuse 14 et le cas échéant, la modulation de l'intensité du rayonnement laser L.

Il est ainsi possible d'éclairer la couche 28 de matériaux phosphorescents avec le rayonnement laser L de manière à former sur cette couche 28 une image, cette image étant formée d'une succession de lignes formées chacune d'une succession de points plus ou moins lumineux, de la même manière qu'une image sur un écran de télévision à tube cathodique.

De préférence, le système d'éclairage et/ou de signalisation 10 est adaptatif et il comporte à cet effet des moyens classiques pour moduler l'intensité lumineuse de façon continue, l'intensité croissant ou décroissant continûment entre une valeur minimale et une valeur maximale. On peut également moduler l'intensité lumineuse de façon discrète, l'intensité variant par sauts d'une valeur à une autre, entre une valeur minimale et une valeur maximale. Dans les deux cas, on peut prévoir que la valeur minimale nulle correspond à une absence de lumière.

Chaque point de la couche 28 de matériaux phosphorescents ainsi éclairé par le rayonnement laser L émet de la lumière B, avec une intensité qui est directement fonction de l'intensité du rayonnement laser L qui éclaire ce point, l'émission s'effectuant selon un diagramme d'émission lambertienne.

La couche 28 de matériaux phosphorescents peut alors être considérée comme une source de rayonnement secondaire, constituée d'une image lumineuse, dont le système optique d'imagerie 22 forme une image à l'infini, par exemple sur un écran placé à distance dans l'axe du système optique 22 et perpendiculairement à cet axe. L'image sur un tel écran est la matérialisation du faisceau lumineux FL émis par le système optique 22.

Les différentes zones de matériaux phosphorescents 30, 32 coïncident avec des cellules 30, 32 d'une matrice de ligne(s) et de colonne(s), les différents matériaux phosphorescents 30, 32 étant répartis dans les différentes cellules 30, 32.

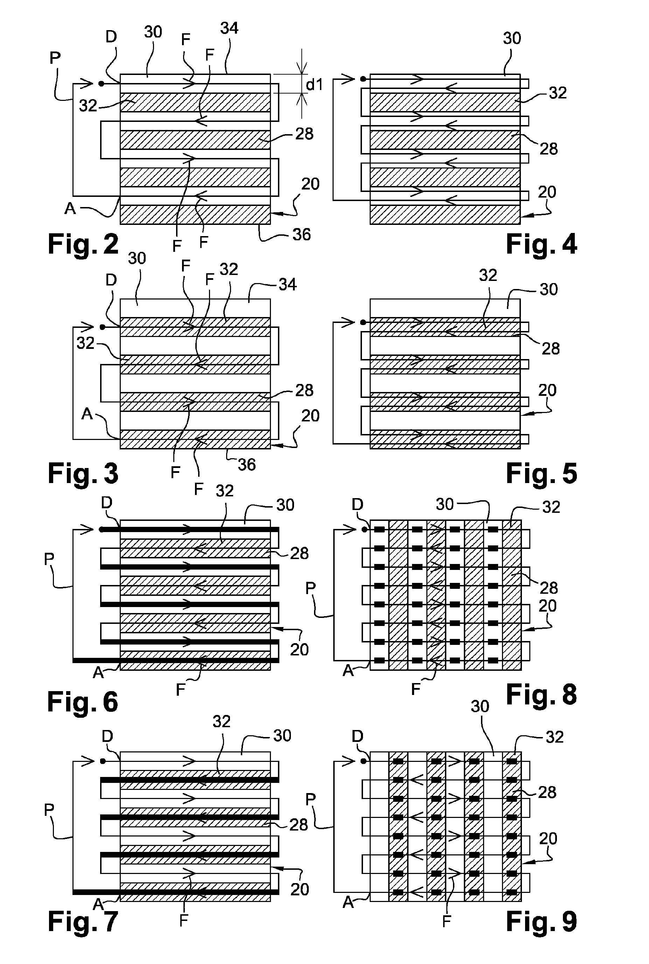

On a représenté sur les figures 2 à 16 différents modes de réalisation du dispositif 20 de conversion de longueur d'onde. Sur ces figures 2 à 16, les éléments analogues à ceux de la figure 1 sont désignés par des références identiques.

Dans tous ces modes de réalisation, les cellules 30, 32 de la matrice sont sensiblement rectangulaires et ont au moins deux côtés d₁, d₂, adjacents, la longueur du côté d₁ étant sensiblement égale à 1 mm dans l'exemple. Toutefois, la longueur du côté d₁, pourrait être alternativement égale à 0,5 mm ou encore 0,1 mm dans d'autres exemples de réalisation.

En référence aux figures 2 à 13, on a représenté un trajet P du rayonnement lumineux, commandé par les moyens de pilotage 17 du système de balayage 18, parcouru essentiellement sur le dispositif 20 de conversion de longueur d'onde. Le sens de parcours du trajet P est représenté par des flèches F. Le trajet P comporte un point de départ D situé près d'un bord 34 du dispositif 20 de conversion de longueur d'onde et un point d'arrivée A situé près d'un bord opposé 36 au bord 34. La surface de balayage 24 inclue les surfaces des zones soit du premier matériau 30 soit du deuxième matériau 32 en fonction du paramètre de sélection.

Le trajet P de balayage suit des lignes parallèles à chaque ligne de cellules 30, 32 de la matrice et perpendiculaires à chaque colonne de cellules de la matrice.

En référence aux figures 2 à 7, et conformément aux trois premiers modes de réalisation, on voit que les zones 30, 32 de la surface libre de la couche 28 coïncident avec des cellules 30, 32 d'une matrice comportant une colonne et plusieurs lignes.

### Premier mode de réalisation du dispositif 20.

En référence à la figure 2, le paramètre de sélection est réglé sur la fonction feu de circulation diurne. Les moyens 17 pilotent le système de balayage 18 de façon à former la surface balayée 24 en y incluant les surfaces des zones 30 du premier matériau. Le trajet P comporte un seul passage sur chaque ligne du premier matériau 30 entre le point de départ D et le point d'arrivée A.

En référence à la figure 3, le paramètre de sélection est réglé sur la fonction clignotant. Les moyens 17 pilotent le système de balayage 18 de façon à former la surface balayée 24 en y incluant les surfaces des zones 32 du deuxième matériau. Le trajet P comporte un seul passage sur chaque ligne du deuxième matériau 32 entre le point de départ D et le point d'arrivée A.

### Deuxième mode de réalisation du dispositif 20.

En référence à la figure 4, le paramètre de sélection est réglé comme pour la figure 2. Mais dans ce cas, le trajet P comporte deux passages consécutifs sur chaque ligne du premier matériau 30, le trajet P ayant un parcours en boustrophédon entre le point de départ D et le point d'arrivée A, et la surface de balayage 24 incluant les surfaces des zones 30 du premier matériau.

En référence à la figure 5, le paramètre de sélection est réglé comme pour la figure 3. Mais dans ce cas, le trajet P comporte deux passages consécutifs sur chaque ligne du deuxième matériau 32, le trajet P ayant un parcours en boustrophédon entre le point de départ D et le point d'arrivée A et la surface de balayage 24 incluant les surfaces des zones 32 du deuxième matériau.

Ainsi, le dispositif de conversion de longueur d'onde 20 selon le premier mode de réalisation (figures 2 et 3) ou selon le deuxième mode de réalisation (figures 4 et 5) permet de mettre en oeuvre un procédé de pilotage du système d'éclairage et/ou de signalisation 10 selon lequel on pilote le système de balayage 18 de façon que le rayonnement lumineux balaye uniquement des zones de même matériau du dispositif 20 de conversion de longueur d'onde. En effet, l'on peut réaliser soit une fonction de feu de circulation diurne soit une fonction clignotant en fonction du paramètre de sélection.

### Troisième mode de réalisation du dispositif 20.

En référence à la figure 6, le paramètre de sélection est réglé comme pour la figure 2. Mais dans ce cas, le trajet P comporte un passage sur chaque ligne des deux matériaux entre le point de départ D et le point d'arrivée A, la source lumineuse 14 n'étant activée que sur les surfaces des zones 30 du premier matériau. On notera que l'on a représenté l'activation de la source lumineuse par une surépaisseur du trait illustrant le trajet P.

En référence à la figure 7, le paramètre de sélection est réglé comme pour la figure 3. Mais dans ce cas, le trajet P comporte un passage sur chaque ligne des deux matériaux entre le point de départ D et le point d'arrivée A, la source lumineuse 14 n'étant activée (trajet P en surépaisseur) que sur les surfaces des zones 32 du deuxième matériau.

Ainsi, le troisième mode de réalisation (figures 6 et 7) permet de mettre en oeuvre un procédé de pilotage du système d'éclairage et/ou de signalisation 10 dans lequel on pilote le système de balayage 18 comme si le rayonnement lumineux devait balayer l'ensemble des zones de matériaux différents du dispositif 20. Toutefois, on commande l'activation de la source lumineuse 14 uniquement lorsque le système de balayage 18 est dans une configuration d'orientation du rayonnement lumineux vers des zones de même matériau du dispositif 20 de conversion de longueur d'onde. La source lumineuse 14 est désactivée lorsque le système de balayage 18 est dans une configuration d'orientation du rayonnement lumineux vers les autres zones du dispositif 20 de conversion de longueur d'onde.

### Quatrième mode de réalisation du dispositif 20.

En référence aux figures 8 et 9, on voit que les zones 30, 32 de la surface libre de la couche 28 coïncident avec des cellules 30, 32 d'une matrice comportant une ligne et plusieurs colonnes.

### Cinquième mode de réalisation du dispositif 20.

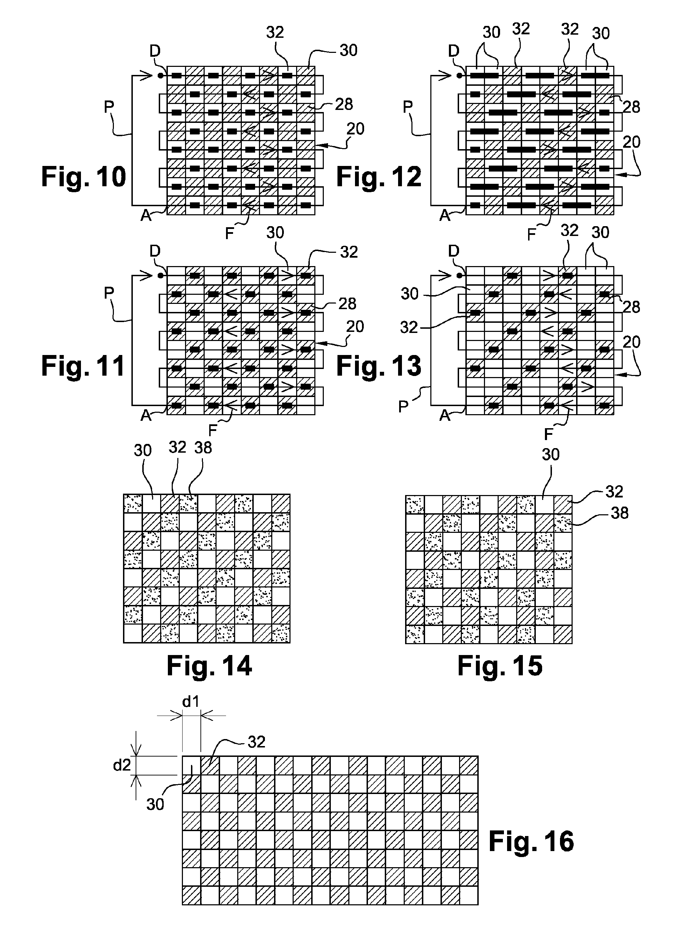

En référence aux figures 10 et 11, on voit que les zones 30, 32 de la surface libre de la couche 28 coïncident avec des cellules 30, 32 d'une matrice comportant plusieurs lignes et plusieurs colonnes.

### Sixième mode de réalisation du dispositif 20.

En référence aux figures 12 et 13, on voit que les zones de la surface libre de la couche 28 coïncident avec des cellules 30, 32 d'une matrice comportant notamment deux ou trois cellules 30, 32 successives par rapport au sens de balayage comportant un même matériau.

Le procédé de pilotage du système d'éclairage et/ou de signalisation 10 comportant le dispositif 20 selon les quatrième à sixième modes de réalisation est analogue au procédé de pilotage du troisième mode de réalisation.

### Septième, huitième et neuvième modes de réalisation du dispositif 20.

En référence aux figures 14 et 15, on voit que le dispositif 20 de conversion de longueur d'onde comprend un troisième matériau 38 recouvrant le substrat 24, les premier 30, deuxième 32 et troisième 38 matériaux étant répartis en au moins trois zones différentes de la surface libre de la couche. Le troisième matériau 38 réémet de la lumière rouge.

En référence à la figure 16, la surface totale de l'ensemble des zones de matériaux recouvrant le substrat 26 a une forme générale de rectangle dont le grand côté est sensiblement égal à deux fois le petit côté. Une telle forme permet d'obtenir un faisceau lumineux FL deux fois plus étendu horizontalement que verticalement, ce qui assure le respect d'une grille règlementaire relative aux systèmes d'éclairage et/ou de signalisation.

On notera que l'invention n'est pas limitée aux modes de réalisation précédemment décrits. Par exemple, le système d'éclairage et/ou de signalisation 10 peut comporter des moyens de variation (non représentés) de la vitesse du balayage de zone en fonction de paramètres tels que la dimension d'une zone ou la position d'une zone. Par ailleurs, la surface de balayage 24 peut être formée par la surface de la couche 28 du premier matériau 30 phosphorescent et du deuxième matériau 32 phosphorescent recouvrant le substrat 26, le deuxième matériau 32 réémettant une couleur complémentaire de celle du premier matériau 30. Dans ce cas, la source lumineuse 14 est activée en permanence.

De même, on pourra prévoir que le système d'éclairage et/ou de signalisation décrit plus haut fonctionne en transmission au lieu de fonctionner en réflexion ainsi que cela a été décrit. Dans un tel mode de fonctionnement, le substrat 26 est constitué d'un matériau transparent, sur une face duquel sont déposés des matériaux photosensibles différents 30, 32 et 38 sur des zones différentes, l'autre face recevant le rayonnement lumineux L de la source lumineuse 14, qui vient donc frapper les matériaux photosensibles après avoir traversé le matériau transparent. A cette seule différence près, le fonctionnement est le même que celui qui a été décrit.

## Revendications

1. Système d'éclairage et/ou de signalisation (10) pour véhicule automobile comportant :
- au moins une source lumineuse (14) primaire émettant un rayonnement lumineux (L),
- un système de balayage (18) recevant le rayonnement lumineux (L) de la source lumineuse (14) primaire et le répartissant spatialement sur un dispositif (20) de conversion de longueur d'onde, de façon à balayer sur ce dispositif de conversion une surface de balayage (24),
- le dispositif (20) de conversion de longueur d'onde recevant le rayonnement lumineux (L) de la source primaire et réémettant un rayonnement de lumière (B),
- un système (22) optique d'imagerie recevant la lumière (B) réémise par le dispositif (20) de conversion de longueur d'onde et projetant cette lumière (B) dans l'axe du véhicule pour former un faisceau lumineux (FL), le dispositif (20) de conversion de longueur d'onde étant situé au voisinage d'un plan focal du système (22) optique d'imagerie,
**caractérisé en ce que** le dispositif (20) de conversion de longueur d'onde comprend un substrat (26) recouvert au moins en partie par une couche comportant au moins des premier (30) et deuxième (32) matériaux phosphorescents différents répartis en au moins deux zones différentes de la surface libre de la couche (28), le système d'éclairage et/ou de signalisation (10) comprenant de plus des moyens de pilotage (17) du système de balayage (18) de façon à former la surface balayée (24) en y incluant une surface du premier (30) matériau et/ou une surface du deuxième matériau (32) en fonction d'un paramètre de sélection, le système d'éclairage et/ou de signalisation réalisant deux fonctions différentes d'éclairage et/ou de signalisation.

2. Système selon la revendication 1, dans lequel le premier (30) matériau réémet de la lumière blanche et le deuxième (32) matériau réémet de la lumière ambre.

3. Système selon la revendication 1, dans lequel le deuxième (32) matériau réémet une couleur complémentaire de celle du premier (30) matériau.

4. Système selon l'une des revendications précédentes, dans lequel le dispositif (20) de conversion de longueur d'onde comprend un troisième matériau recouvrant le substrat (26), les premier (30), deuxième (32) et troisième (38) matériaux étant répartis en trois zones différentes de la surface libre de la couche (28).

5. Système selon la revendication 4, dans lequel le troisième (38) matériau réémet de la lumière rouge.

6. Système selon l'une quelconque des revendications précédentes, dans lequel les zones coïncident avec des cellules (30, 32, 38) d'une matrice de ligne(s) et de colonne(s), les différents matériaux (30, 32, 38) phosphorescents étant répartis dans les différentes cellules (30, 32, 38), la matrice comportant par exemple une ligne et plusieurs colonnes, une colonne et plusieurs lignes, plusieurs lignes et plusieurs colonnes, ou encore deux ou trois cellules (30, 32, 38) successives par rapport à la direction de balayage comportant un même matériau.

7. Système selon la revendication 6, dans lequel les cellules (30, 32, 38) de la matrice sont sensiblement rectangulaires et ont au moins un côté (d₁) de longueur sensiblement égale à 1 mm, de préférence à 0, 5 mm, et encore de préférence à 0,1 mm.

8. Système selon l'une quelconque des revendications précédentes, dans lequel la surface totale de l'ensemble des zones de matériaux recouvrant le substrat a une forme générale de rectangle dont le grand côté est sensiblement égal à deux fois le petit côté.

9. Système selon l'une quelconque des revendications 1 à 8, dans lequel la surface balayée (24) est définie par un balayage par le rayonnement lumineux (L) activé des zones de même matériau uniquement.

10. Système selon l'une quelconque des revendications 1 à 8, dans lequel la surface balayée (24) est définie par balayage de toutes les zones des différents matériaux, le rayonnement lumineux (L) n'étant activé que lors du balayage des zones d'un même matériau uniquement.

11. Système selon l'une quelconque des revendications précédentes comprenant des moyens de variation de la vitesse du balayage de zone en fonction de paramètres tels que la dimension d'une zone ou la position d'une zone.

12. Système selon l'une quelconque des revendications précédentes, **caractérisé en ce que** le substrat (26) forme un miroir (26).

13. Système selon l'une quelconque des revendications 1 à 11, **caractérisé en ce que** le substrat (26) est en matériau transparent, des matériaux photosensibles différents (30, 32, 38) étant déposés sur des zones différentes sur une face du matériau transparent (26), l'autre face recevant le rayonnement lumineux (L) de la source lumineuse (14).

14. Procédé de pilotage d'un système d'éclairage et/ou de signalisation (10) pour véhicule automobile, **caractérisé en ce que** l'on pilote le système d'éclairage et/ou de signalisation (10) selon l'une quelconque des revendications 1 à 13, de la façon suivante :
- on pilote le système de balayage (18) de façon que le rayonnement lumineux balaye uniquement des zones de même matériau du dispositif (20) de conversion de longueur d'onde.

15. Procédé de pilotage d'un système d'éclairage et/ou de signalisation pour véhicule automobile, **caractérisé en ce que** l'on pilote le système d'éclairage et/ou de signalisation (10) selon l'une quelconque des revendications 1 à 13, de la façon suivante :
- on pilote le système de balayage (18) comme si le rayonnement lumineux devait balayer l'ensemble des zones de matériaux différents du dispositif (20) de conversion de longueur d'onde, et
- on commande l'activation de la source lumineuse (14) uniquement lorsque le système de balayage (18) est dans une configuration d'orientation du système lumineux vers des zones du premier matériau du dispositif (20) de conversion de longueur d'onde, la source lumineuse (14) étant désactivée lorsque le système de balayage (18) est dans une configuration d'orientation du système lumineux vers des zones d'un autre matériau que le premier matériau du dispositif (20) de conversion de longueur d'onde.
